# EUROPÄISCHE PATENTSCHRIFT

(11) **EP 1 755 823 B1**
(45) Veröffentlichungstag und Bekanntmachung des Hinweises auf die Patenterteilung: **18.11.2009**
(21) Anmeldenummer: 05763269.7
(22) Anmeldetag: 14.06.2005
(51) Int. Cl.: B23Q 3/155

(54) **VORRICHTUNG ZUM SPEICHERN UND HANDHABEN VON WERKZEUGEN EINES BEARBEITUNGSZENTRUMS**
APPARATUS FOR STORING AND HANDLING TOOLS OF A MACHINING CENTER
DISPOSITIF DE STOCKAGE ET DE MANIPULATION D'OUTILS D'UN CENTRE D'USINAGE

(30) Priorität: 14.06.2004 DE 202004009642 U
(43) Veröffentlichungstag der Anmeldung: 28.02.2007
(73) Patentinhaber: StarragHeckert GmbH, 09117 Chemnitz (DE)
(72) Erfinder: SCHOPPE, Eberhard, 09212 Limbach-Oberfrohna (DE); BECHER, Mirko, 09116 Chemnitz (DE); BELZ, Holger, 09126 Chemnitz (DE); KEILING, Ulf, 09127 Chemnitz (DE); KEMTER, Heino, 09235 Burkhardtsdorf, OT Kemtau (DE); NEUBER, Dieter, 09123 Chemnitz (DE); REH, Jürgen, 09337 Hohenstein-Ernstthal (DE); SCHWARZENBERGER, Rainer, 09387 Jahnsdorf (DE); SEYFERT, Sören, 09128 Chemnitz (DE); WEIRAUCH, Frank, 09128 Chemnitz (DE); ZIEGLER, Andreas, 09385 Lugau (DE)
(74) Vertreter: Rumrich, Gabriele
(86) Internationale Anmeldenummer: PCT/DE2005/001078
(87) Internationale Veröffentlichungsnummer: WO 2005/120768

(56) Entgegenhaltungen:
- DE-A1- 4 033 036
- PATENT ABSTRACTS OF JAPAN Bd. 011, Nr. 228 (M-610), 24. Juli 1987 (1987-07-24) & JP 62 044336 A (YASUNAGA TEKKOSHO:KK), 26. Februar 1987 (1987-02-26)
- PATENT ABSTRACTS OF JAPAN Bd. 006, Nr. 043 (M-117), 17. März 1982 (1982-03-17) & JP 56 157934 A (MITSUBISHI HEAVY IND LTD), 5. Dezember 1981 (1981-12-05)

## Beschreibung

Die Erfindung betrifft eine Vorrichtung zum Speichern und Handhaben von Werkzeugen eines Bearbeitungszentrums.

Gemäß JP 62 044336 A soll ein effizient und schnell durchführbarer automatischer Werkzeugwechsel an NC-Maschinen geschaffen werden. Dabei ist jede der in einer Reihe angeordneten NC-Maschinen mit einem Werkzeugmagazin ausgestattet. An einem Ende dieser Reihe befindet sich ein Werkzeugspeicher, zu dem/von dem ein Werkzeugmagazin mit einer Werkzeugwechseleinrichtung entlang den NC-Maschinen verfahrbar ist. Die Positionen der Werkzeugaufnahmen in dem Werkzeugspeicher sowie in dem beweglichen Werkzeugmagazin und in dem der jeweiligen NC-Maschine zugeordneten Werkzeugmagazin werden dabei gespeichert. Diese Einrichtung besitzt - insbesondere auf Grund des jeder NC-Maschine fest zugeordneten Werkzeugmagazins - eine eingeschränkte Einsatz- bzw. Kombinationsmöglichkeit.

DE 699 02 974 T2 beschreibt eine Vorrichtung zum Speichern und Wechseln von Werkzeugen einer Werkzeugmaschine und ein Arbeitsverfahren dieser Vorrichtung. Diese Vorrichtung besteht aus einem Modul zur Werkzeuglagerung mit einer Vielzahl von zueinander fluchtenden Werkzeugaufnahmen, einem Handhabungsmodul, der sich in einer vertikalen Ebene bewegt und einem Übergabemodul zum Übergeben des Werkzeuges zur Aufnahme in einem z.B. Hochgeschwindigkeitsbearbeitungszentrum. Nachteilig dabei ist, dass nicht mehrere Werkzeuge zwischengespeichert werden können und dass ungenügende Kombinationsvarianten zur Aufnahme der Werkzeuge gegeben sind. Weiterhin sind durch die großen vertikalen Verfahrwege des Handhabungsmoduls hohe Werkzeugwechselzeiten zu verzeichnen.

DE-4033036-A offenbart eine Vorrichtung nach dem Oberbegriff von Anspruch 1.

Aufgabe der Erfindung ist es, eine Vorrichtung zum Speichern von Werkzeugen eines Bearbeitungszentrums zu entwickeln, die ein zwischenspeichern mehrerer Werkzeuge gewährleistet und eine modulare Bauweise entsprechend der Anzahl der zu speichernden Werkzeuge ermöglicht, wobei eine große Einsatz- und Kombinationsmöglichkeit erzielbar ist.

Diese Aufgabe wird mit den Merkmalen des ersten Patentanspruchs gelöst. Vorteilhafte Ausführungen ergeben sich aus den Unteransprüchen.

Die Vorrichtung zum Speichern und Handhaben von Werkzeugen eines Bearbeitungszentrums weist ein Modul zur Werkzeuglagerung auf, welches eine Vielzahl von zueinander fluchtenden Werkzeugaufnahmen besitzt und eine entlang des Moduls verfahrbaren Zubringer, mit welchem Werkzeuge aus dem Modul entnehmbar und in das Modul einlegbar sind, wobei das dem Bearbeitungszentrum zugeordnete Modul zur Werkzeuglagerung aus einem oder mehreren nebeneinander angeordneten Kettenmagazinen besteht, und der in einer horizontalen Ebene entlang den Kettenmagazinen bewegbare Zubringer mit einem zur Zwischenspeicherung von Werkzeugen dienenden, ebenfalls als Kettenmagazin ausgebildeten Übergabemagazin zur Übergabe/Entnahme von Werkzeugen in Kontakt bringbar ist, und sich an das Übergabemagazin eine Übergabestation zur Übergabe/Entnahme von Werkzeugen zu/von der Arbeitsspindel anschließt.

Das Modul weist zwei oder mehr nebeneinander angeordnete baugleiche Kettenmagazine auf. Die Kettenmagazine des Moduls sind mit einer Verkleidung versehen, die selbsttätig öffnenden Beschickungsfenster aufweist. Dabei ist bevorzugt jedem Kettenmagazin des Moduls ein Beschickungsfenster zugeordnet, wobei die Beschickungsfenster mehrerer Kettenmagazine in einer gleichen ergonomischen Höhe angeordnet sind.

Das Modul weist weiterhin eine NC-Bedientafel zur Speicherung der Werkzeugdaten auf. Die Speicherung dieser Daten kann per Hand erfolgen oder mittels einer am Modul vorgesehenen Leseeinrichtung. Das Modul und das Übergabemagazin weisen mehrere Handlingplätze auf, z.B. 2 bis 10 Handlingsplätze. Im Übergabemagazin werden dabei die Werkzeuge gespeichert, die für die unmittelbaren Bearbeitungsvorgänge des Bearbeitungszentrums benötigt werden. Vorteilhafter Weise ist eine Reinigungsstation, z.B. Waschstation, zum Säubern der Werkzeuge vorgesehen, die vorzugsweise zwischen Modul zur Werkzeuglagerung und

Zubringer angeordnet und beim Auswechseln und/oder Einwechseln der Werkzeuge aktivierbar ist. Weiterhin kann optional eine Kontrollstation zur Erkennung von werkzeugbruch und/oder -Verschleiß und/oder zum Schutz vor dem Einwechseln falscher Werkzeuge vorgesehen sein. Die Kontrollstation wird dabei bevorzugt vor oder nach der Übergabestation angeordnet oder in die Übergabestation integriert.

Mit der Erfindung wird eine Vorrichtung zum Speichern und Handhaben von Werkzeugen eines Bearbeitungszentrums geschaffen, die durch ihre modulare Bauweise leicht den Erfordernissen des jeweiligen Bearbeitungszentrums angepasst werden kann. Je nach der Anzahl der bereitzustellenden Werkzeuge kann die Anzahl der im Modul integrierten Kettenmagazine variiert werden. Eine weitere Variantenvielfalt wird durch die Wahl von Kettenmagazinen mit entsprechenden Speicherplätzen geschaffen. So können z.B. Module mit 2 bis 4 Kettenmagazinen und jeweils 60 Speicherplätzen oder Module mit 2 bis 4 Kettenmagazinen und jeweils 80 Speicherplätzen je Kettenmagazin eingesetzt werden. Dazu kommen die Speicherplätze des Übergabemagazins (ebenfalls 60 oder 80), so dass in diesem Fall bis 320 Werkzeuge gespeichert werden können. Die Kettenmagazine ermöglichen die Bereitstellung des Werkzeuge an einer definierten Übergabeposition, so dass der Zubringer sich nur in einer horizontalen Ebene bewegen muss. Während der Zubringer ein Werkzeug an das Übergabemagazin weitergibt, kann durch ein Kettenmagazin des Moduls bereits das nächste Werkzeug in Übergabeposition bewegt werden. Jedes Magazin des Moduls ist direkt für den Bediener zugänglich, wobei die Beschickungsfenster in einer ergonomisch günstigen Höhe angeordnet sind und sich selbsttätig öffnen. Anstelle von Kettenmagazine können äquivalent auch Zahnriemenmagazine oder andere Magazine, die eine Bewegung der Werkstücke an die Übergabeposition zum Zubringer gewährleisten, eingesetzt werden.

Mit dieser Erfindung verkürzen sich die Werkzeugbereitstellzeiten gegenüber bisherigen Lösungen ca. um 50%. Dies ist verbunden durch die hohe Funktionalität und Zuverlässigkeit durch den Einsatz bewehrter Kettenmagazine oder Zahnriemenmagazine. Weiterhin sind die Werkzeugkegel im Magazin vor Verschmutzung geschützt. Dadurch ist eine Kegelreinigung nicht zwingend erforderlich, kann jedoch optional vorgesehen werden.

Die Erfindung wird nachfolgend anhand von Ausführungsbeispielen näher erläutert. Es zeigen:
- Fig. 1:: Vorrichtung mit einem Modul 1, welcher ein erstes Kettenmagazin 1.1 aufweist. Diese Vorrichtung fällt nicht unter die Ansprüche.
- Fig. 2:: Vorrichtung mit einem Modul 1, welcher drei Kettenmagazine 1.1, 1.2, 1.3 aufweist,
- Fig. 3:: Modul 1, welcher ein erstes 1.1 und ein zweites Kettenmagazin 1.2 aufweist mit Verkleidung 6 in dreidimensionaler Ansicht aus Beschickungsrichtung,
- Fig. 4:: Modul 1 gem. Fig. 2 aus Richtung des Zubringers 2,

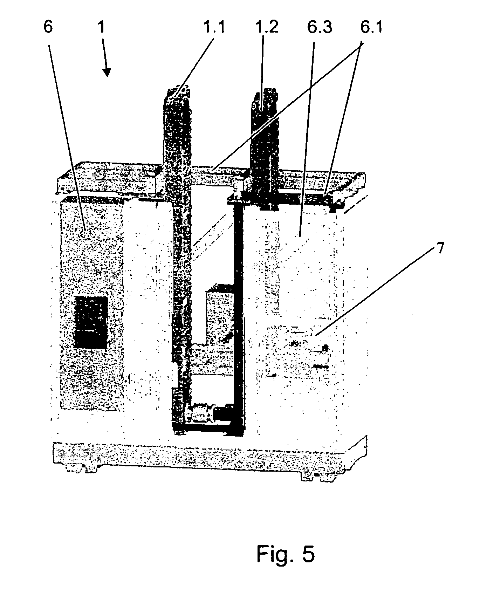

- Fig. 5:: Modul 1 mit teilweise entfernter Verkleidung 6.

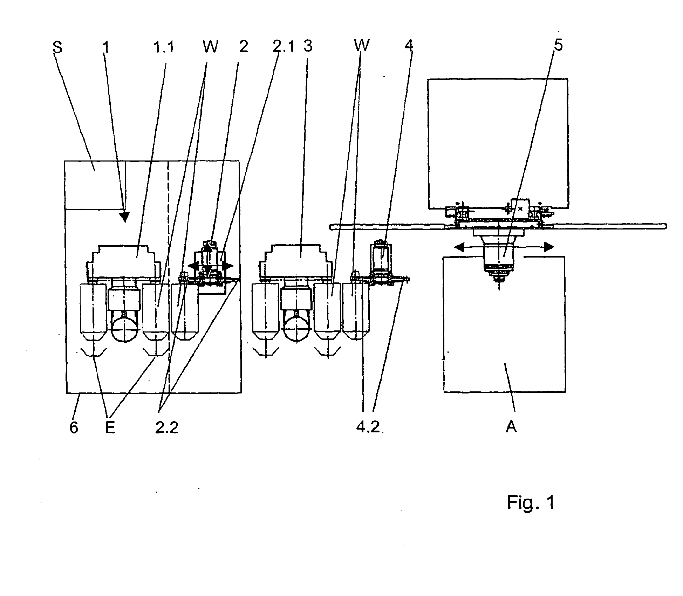

In Figur 1 ist eine Vorrichtung mit einem Modul 1 dargestellt, welcher lediglich ein erstes Kettenmagazin 1.1 aufweist und daher nicht unter die Ansprüche fällt. In dem ersten Kettenmagazin 1.1 sind Werkstücke W mit zueinander parallelen horizontalen Achsen gespeichert.

Die Position der Werkstücke W ist durch Bewegung/Rotation der nicht separat bezeichneten Ketten des Kettenmagazins veränderbar. An den Modul 1 schließt sich ein Zubringer 2 an, welcher mittels eines Linearmoduls 2.1 horizontal in X-Richtung verschiebbar ist und in Y-Richtung die Werkzeuge entnimmt und weitergibt. Der Zubringer 2 weist dazu Greifer 2.2 zur Handhabung der Werkzeuge W auf.

An den Zubringer schließt sich ein Übergabemagazin 3 an, welches ebenfalls als Kettenmagazin ausgebildet ist. Jeweils ein Greifer 2.2 ist in Richtung zum ersten Kettenmagazin 1.1 und ein Greifer 2.2 in Richtung zum Übergabemagazin 3 angeordnet. In dem Übergabemagazin 3 sind die Werkstücke W gespeichert, die für die unmittelbare Bearbeitung des jeweiligen Werkstückes (nicht dargestellt) erforderlich sind.

Aus dem Übergabemagazin 3 werden die Werkzeuge W mittels einer Übergabestation 4 in die Arbeitsspindel 5 eingewechselt bzw. aus dieser ausgewechselt. Dazu weist die Übergabestation Greifer 4.2 auf. Im Bereich der Arbeitsspindel 5 befindet sich der Arbeitsraum A. Mit E sind die Endstellungen der Werkzeuge W bezeichnet, die beim Auswechseln eingenommen werden.

Der Modul 1 und der Zubringer 2 sind gemeinsam in einer Verkleidung 6 angeordnet, in welche auch der Schaltschrank S integriert ist.

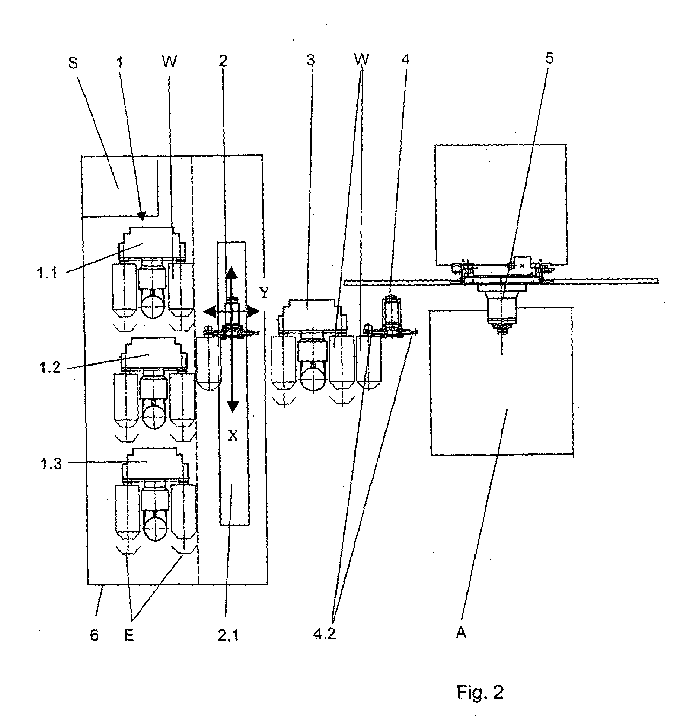

Eine ähnliche Vorrichtung, jedoch mit einem Modul 1, welcher drei Kettenmagazine 1.1, 1.2, 1.3 aufweist, ist in Figur 2 dargestellt. Die Länge des Zubringers 2 ist der Länge des Moduls 1 angepaßt. Wenn ein Kettenmagazin 1.1, 1.2, 1.3 beladen wird, ist dieses für die den Zubringer 2 gesperrt.

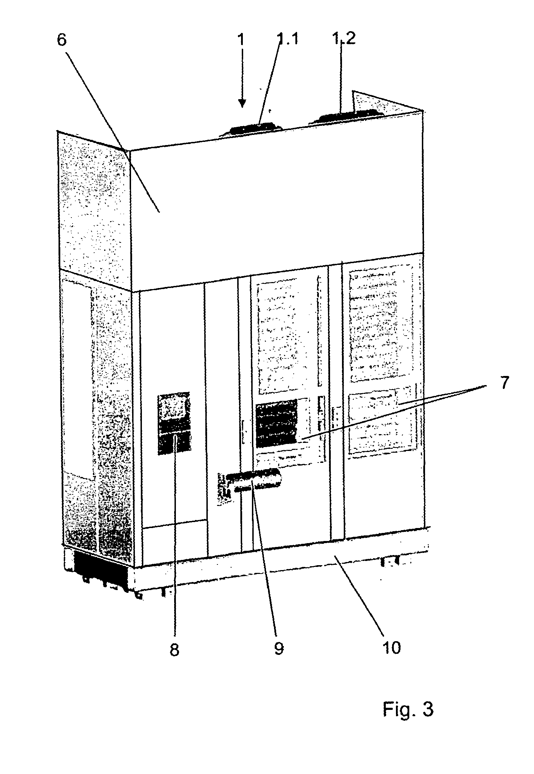

Ein Modul 1, welcher ein erstes 1.1 und ein zweites Kettenmagazin 1.2 aufweist, mit Verkleidung 6 in dreidimensionaler Ansicht aus Beschickungsrichtung, wird in Figur 3 gezeigt. Die Verkleidung 6 besitzt Fenster 7, welche sich automatisch zum Beschicken der Werkstücke geöffnet werden. Die Fenster 7 sind dabei in einer für den Bediener günstigen ergonomischen Position angeordnet. Von der Verkleidung 6 werden der Modul 1 (erstes und zweites Kettenmagazin 1.1, 1.2) und der Zubringer 2 umhaust. In Bedienrichtung ist im Gehäuse 6 eine Bedientafel 8 zur Eingabe der Werkzeugdaten vorgesehen. Diese können auch über eine ebenfalls an der Verkleidung 6 angeordnete Leseeinrichtung 9 eingelesen werden. Das Modul 1, der Zubringer 2, der Schaltschrank S und die Verkleidung 7 sitzen auf einem Grundgestell 10.

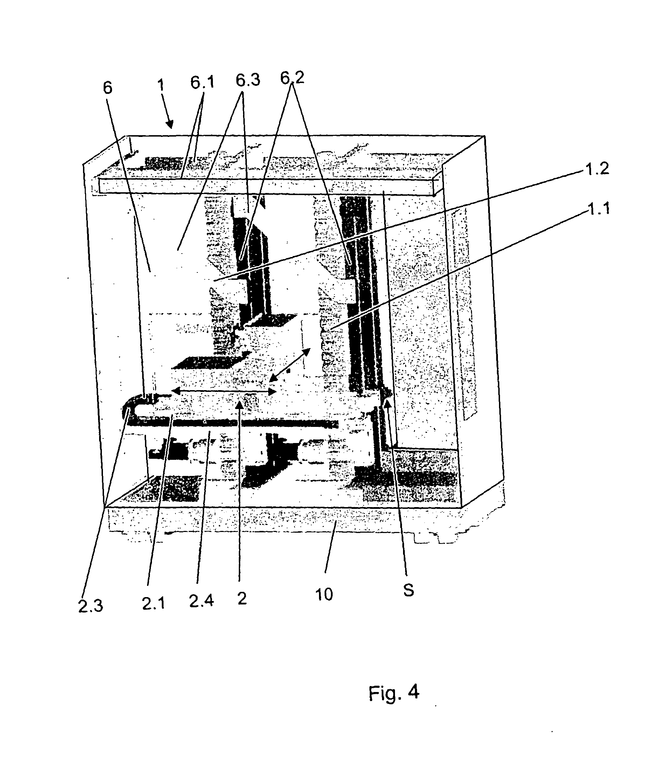

Diese bauliche Einheit aus Richtung des Zubringers 2 wird in Figur 4 dargestellt. Aus dieser Ansicht ist ersichtlich, dass die Verkleidung an ihrer Oberseite horizontale Streben 6.1 aufweist. Zwischen den oben liegenden horizontalen Streben 6.1 und dem Grundgestell 10 erstrecken sich vertikale Streben 6.2 und von den horizontalen Streben 6.1 zu den vertikalen Streben 6.2 schräge Stützstreben 6.3. Die vertikalen Streben 6.2 dienen zur Befestigung des ersten und zweiten Kettenmagazins 1.1, 1.2 des Moduls 1. Weiterhin ist an den vertikalen Streben 6.2 der auf einer Trägereinheit 2.4 sitzende Linearmodul 2.1 mit dem Zubringer 2 angeordnet. Zur Stromversorgung des Zubringers 2 dient ein Energierohr 2.3.

Einen Modul 1 mit teilweise entfernter Verkleidung 6. Ist in Figur 6 dargestellt. Es wurde der Mittelbereich der vertikalen Streben demontiert und der Mittelbereich der Verkleidung entfernt. Dadurch kann das entsprechende Kettenmagazin (hier 1.1) von vorn montiert oder demontiert werden.

Die Vorrichtung, die im wesentlichen aus Modul 1, Zubringer 2, Übergabemagazin 3, Übergabestation 4 besteht, kann entsprechend spezieller Anforderungen noch erweitert werden (nicht dargestellt), z.B. durch eine Werkzeugreinigungsvorrichtung oder einer Kontrollstation zur Erkennung von Werkzeugbruch und/oder -Verschleiß und/oder zum Schutz vor dem Einwechseln falscher Werkzeugen. Die Reinigungsvorrichtung ist dabei bevorzugt zwischen Modul und Zubringer angeordnet. Die Kontrollstation befindet sich vor oder nach der Übergabestation oder ist in die Übergabestation integriert ist. Dabei erfolgt z.B. die Werkzeugbruchkontrolle durch Erfassen der Längendifferenz des ein- oder auszuwechselnden Werkzeuges im Vergleich zur Soll-Länge des jeweiligen Werkstücks.

Neben den beschriebenen Ausführungsbeispielen ist es auch möglich, entsprechende Vorrichtungen zu verwenden, die Module mit vier oder mehr Kettenmagazinen aufweisen.

Die konstruktive Gestaltung und Auslegung von Zubringer 2, Linearmodul 2.1 und Greifer 2.2 sowie von Übergabestation 4 und den entsprechenden Greifern 4.2 liegt im Ermessen des Fachmanns und wird bestimmt von der Art der Werkzeugaufnahmen und der Werkzeuggröße.

## Patentansprüche

1. Vorrichtung zum Speichern und Handhaben von Werkzeugen eines Bearbeitungszentrums, mit einem Modul (1) zur Werkzeuglagerung, welches eine Vielzahl von zueinander fluchtenden Werkzeugaufnahmen aufweist und einem entlang dem Modul (1) verfahrbaren Zubringer (2), mit welchem Werkzeuge (W) aus dem Modul (1) entnehmbar und in das Modul (1) einlegbar sind, wobei sich an den Zubringer ein zur zwischenspeicherung von Werkzeugen dienendes als Kettenmagazin ausgebildetes Übergabemagazin (3) und an das Übergabemagazin (3) eine Übergabestation (4) zur Übergabe/Entnahme von Werkzeugen (W) zu/von der Arbeitsspindel (5) anschließt,
**dadurch gekennzeichnet,**
- **dass** das Modul (1) aus wenigstens zwei nebeneinander angeordneten baugleichen Kettenmagazinen (1.1) besteht,
- **dass** der Zubringer (2) nur in einer horizontalen Ebene entlang dem Modul (1) bewegbar ist,
- **dass** das Modul (1) und der Zubringer (2) als bauliche Einheit ausgebildet und auf einem gemeinsamen Grundgestell (10) angeordnet sind.

2. Vorrichtung nach Anspruch 1, **dadurch gekennzeichnet, dass** das Modul (1) 2 bis 10 Handlingsplätze aufweist.

3. Vorrichtung nach Anspruch 1 oder 2, **dadurch gekennzeichnet, dass** das Übergabemagazin (3) 2 bis 10 Handlingsplätze aufweist.

## Claims

1. An apparatus for storing and handling tools of a machining center, comprising a module (1) for storing tools which comprises a plurality of mutually aligned tool receptacles and a feeder (2) which is displaceable along the module (1) and with which tools (W) can be removed from the module (1) and be placed in the module (1), with a transfer magazine (3) which is used for intermediately storing tools and is arranged as a chain magazine being adjacent to the feeder and a transfer station (4) for transferring/removing tools (W) to/from the working spindle (5) being adjacent to the transfer magazine (3), **characterized in that**
- the module (1) consists of at least two chain magazines (1.1) which are arranged next to one another and are structurally identical;
- the feeder (2) is only movable in one horizontal plane along the module (1);
- the module (1) and the feeder (2) are arranged as a modular unit and are arranged on a common base frame (10).

2. An apparatus according to claim 1, **characterized in that** the module (1) comprises two to ten handling places.

3. An apparatus according to claim 1 or 2, **characterized in that** the transfer magazine (3) comprises two to ten handling places.

## Revendications

1. Dispositif pour le stockage et la manipulation d'outils d'un centre d'usinage, avec un module (1) pour le stockage d'outils présentant une pluralité de logements d'outil alignés les uns sur les autres et un mécanisme d'amenée (2) mobile le long du module (1), avec lequel des outils (W) peuvent être retirés du module (1) et déposés dans le module (1), dans lequel le mécanisme d'amenée est suivi d'un magasin de transfert (3) servant à l'entreposage d'outils et conçu comme un magasin à chaîne et le magasin de transfert (3) est suivi d'un poste de dépose (4) pour la dépose ou le retrait d'outils (W) sur la broche de travail (5),
**caractérisé en ce que**
- le module (1) se compose de deux magasins à chaîne (1.1) de construction identique disposés l'un à côté de l'autre,
- le mécanisme d'amenée (2) est mobile seulement dans un plan horizontal le long du module (1),
- le module (1) et le mécanisme d'amenée (2) forment une unité de construction et sont disposés sur un châssis de base (10) commun.

2. Dispositif selon la revendication 1, **caractérisé en ce que** le module (1) présente entre 2 et 10 emplacements de manipulation.

3. Dispositif selon la revendication 1 ou 2, **caractérisé en ce que** le magasin de transfert (3) présente entre 2 et 10 emplacements de manipulation.
